Europäisches Patentamt

European Patent Office

Office européen des brevets

(19)

(11) **EP 0 838 493 B1**

(12) **EUROPÄISCHE PATENTSCHRIFT**

(45) Veröffentlichungstag und Bekanntmachung des Hinweises auf die Patenterteilung:
**08.08.2001  Patentblatt 2001/32**

(51) Int Cl.⁷: **C08K 3/00**, C08K 13/02, C08L 57/08, H01B 7/00 // (C08K3/00, 3:22, 3:32), (C08K13/02, 3:22, 5:098)

(21) Anmeldenummer: **97118196.1**

(22) Anmeldetag: **20.10.1997**

(54) **Stabilisatorkombination für Kabelummantelungen**

Stabilizer-combination for cable insulations

Combinaison de stabilisant pour isolation de câble

(84) Benannte Vertragsstaaten:
**AT BE DE DK ES FI FR GB GR IT NL SE**

(30) Priorität: **23.10.1996  DE 19644128**

(43) Veröffentlichungstag der Anmeldung:
**29.04.1998  Patentblatt 1998/18**

(73) Patentinhaber: **Bärlocher GmbH**
**D-80992 München (DE)**

(72) Erfinder:
  • **Rosenthal, Michael, Dr.**
    **80801 München (DE)**
  • **Reith, Walter, Dr.**
    **82281 Egenhofen (DE)**
  • **Forster, Stefan, Dr.**
    **85221 Dachau (DE)**

(74) Vertreter: **Grünecker, Kinkeldey,**
    **Stockmair & Schwanhäusser Anwaltssozietät**
    **Maximilianstrasse 58**
    **80538 München (DE)**

(56) Entgegenhaltungen:
**WO-A-91/08984        WO-A-92/15545**
**US-A- 5 451 628**

  • **DATABASE WPI Section Ch, Week 9316 Derwent Publications Ltd., London, GB; Class A14, AN 93-131406 XP002053664 & JP 05 070 649 A (SAKAI CHEM IND CO LTD) , 23.März 1993**

**Beschreibung**

Die vorliegende Erfindung betrifft die Verwendung von Formmassen auf Basis halogenhaltiger Polymere, insbesondere Polyvinylchlorid, enthaltend eine Stabilisatorkombination bei der Herstellung von Kabeln zur Vermeidung eines Abfalls des elektrischen Widerstandswertes durch langandauernde Feuchtigkeitseinwirkung.

Für die thermoplastische Verarbeitung von Polyvinylchlorid werden derzeit üblicherweise Stabilisatoren auf Basis basischer Bleiverbindungen, wie 3-basisches Bleisulfat, 2-basisches Bleistearat oder 2-basisches Bleiphthalat, eingesetzt, um einen Abbau des Polymeren während der Verarbeitung zu verhindern. Diese schwermetallhaltigen Stabilisatoren werden zusammen mit weiteren organischen und anorganischen Co-Stabilisatoren bevorzugt für Anwendungen eingesetzt, für die hohe Langzeitanforderungen an Wärme- und Witterungsstabilität gestellt werden. Im Falle der Stabilisierung von Kabelummantelungen müssen darüber hinaus noch die von verschiedenen Normen geforderten elektrischen Werte eingehalten werden. Ein hoher elektrischer Widerstand ist zur Vermeidung von Kurzschlüssen äußerst wichtig. Besonders kritisch ist hier das Langzeitverhalten des elektrischen Widerstands bei Einwirkung von Feuchtigkeit, was beispielsweise bei Anwendung im Freien gegeben ist. Die derzeit im Einsatz befindlichen Bleistabilisatoren erfüllen alle an sie gestellten Forderungen. Da Bleiverbindungen als toxisch eingestuft werden, wird seit längerem versucht, diese zu substituieren. Seit einiger Zeit werden für die Stabilisierung von Kabeln schwermetallfreie Stabilisatoren verwendet, vor allem auf Basis von Calcium- und Zinkverbindungen, sogenannte Calcium-Zink-Stabilisatoren, die jedoch gegenüber üblichen Bleistabilisatoren deutlich schlechtere Werte bei der Langzeitbeständigkeit des elektrischen Widerstands aufweisen.

So wird in der FR-A-24 03 362 beschrieben, Weich-Polyvinylchlorid für Kabelisolierungen mit einer Mischung aus Calcium-Zink-Fettsäuren, Sorbit und einem β-Diketon zu stabilisieren. In US-A-5,451,628 wird die Verwendung eines "mixed-metal"-Stabilisators mit Hydrotalcit und Antimontrioxid zur Steigerung der Thermostabilität beschrieben.

Mit diesen bleifreien Systemen können zwar zum Teil die Anforderungen an Thermostabilität und Alterungsbeständigkeit erfüllt werden, es werden jedoch nach längerer Einwirkung von Feuchtigkeit durchweg niedrigere Werte für den elektrischen Widerstand als mit den herkömmlichen Bleistabilisatoren gemessen.

In der DE-A-3843581 werden thermoplastische PVC-Formmassen beschrieben, die als Stabilisatorsystem eine Kombination aus einer Zinkseife, einem Ethylenvinylacetat-Copolymer-Hydrolysat, einem Hydrotalcit und gegebenenfalls einem basischen Calcium-Aluminium-Hydroxyphosphit enthalten. Das Verhalten des elektrischen Widerstandes dieser Formmassen wurde jedoch nicht untersucht, da diese Formmassen nicht für Kabelummantelungen verwendet werden.

Aufgabe der vorliegenden Erfindung ist es, Formmassen auf der Basis halogenhaltiger Polymere für Kabelummantelungen zu verwenden, die die Anforderungen an Thermostabilität und Alterungsbeständigkeit erfüllen.

Diese Aufgabe wird erfindungsgemäß gelöst durch die Verwendung einer Formmasse, enthaltend mindestens ein halogenhaltiges Polymer und eine Stabilisatorkombination, umfassend

(a) mindestens einen natürlichen oder synthetischen Hydrotalcit, der gegebenenfalls oberflächenmodifiziert ist, und

(b) mindestens eine basische Calcium-Aluminium-Hydroxyverbindung, gewählt aus

(b1) basischen Calcium-Aluminium-Hydroxyphosphiten der allgemeinen Formel (I)

$$Ca_xAl_2(OH)_{2(x+3-y)}(HPO_3)_y^{2-}\cdot mH_2O \hspace{4cm} (I)$$

worin

$$2 \leq x \leq 12,$$

$$\frac{2x+5}{2} > y > 0$$

und

$$0 \leq m \leq 12$$

bedeutet,
ausgenommen y=1, wenn $2 \leq x \leq 8$ ist;
und/oder
(b2) basischen Calcium-Aluminium-Hydroxy-Carboxylaten der allgemeinen Formel (II)*

$$Ca_x Al_2 (OH)_{[(2x+6)-y]} A_{y/n}^{n-} \bullet mH_2O \qquad (II)$$

worin

$$2 \leq x \leq 12,$$

$$\frac{2x+5}{2} > y > 0,$$

$$0 \leq m \leq 12,$$

$$1 \leq n < 8$$

und

$A^{n-}$ ein aliphatisches gesättigtes, ungesättigtes, geradkettiges oder verzweigtes ein- oder mehrfunktionelles Carbonsäureanion mit 1 bis 22 Kohlenstoffatomen oder ein aromatisches oder heteroaromatisches ein- oder mehrfunktionelles Carbonsäureanion mit 6 bis 20 Kohlenstoffatomen oder Kombinationen hiervon, bedeutet
ausgenommen y=1, wenn $2 \leq x \leq 8$ ist,
für Kabelummantelungen.

Die erfindungsgemäß verwendete Stabilisatorkombination enthält vorzugsweise als weitere Komponente mindestens ein flüssiges oder festes, organisches oder anorganisches Zinksalz.

Durch die erfindungsgemäße Verwendung der oben genannten Formmasse werden Kabelummantelungen erhalten, die auch nach längerer Einwirkung von Feuchtigkeit Widerstandswerte aufweisen, die denen von PVC-Kabelummantelungen mit üblichen Bleistabilisatoren entsprechen.

Hydrotalcite werden beispielsweise in DE-A-4425266, EP-A-0189899, DE-A-3843581, US-A-4,883,533, EP-A-0407139, DE-A-4031818, DE-A-4110835, DE-A-4117034, EP-A-0522810, DE-A-4439934 und US-A-5,352,723 beschrieben; Verbindungen der allgemeinen Formel (I) werden z.B. in DE-A-4106411 beschrieben; und Verbindungen der allgemeinen Formel (II) sind z.B. aus DE-A-4106404 bekannt.

Das Carbonsäureanion $A^{n-}$ in der allgemeinen Formel (II) kann beispielsweise gewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit-, Zitronen- und Aminosäuren. Bevorzugt sind die Anionen der Fumar- und Phthalsäure. Insbesondere werden Fumarate eingesetzt.

Die Komponente (a), d.h. der Hydrotalcit, wird vorzugsweise in einer Menge von 1 bis 12 Gewichtsteilen, insbesondere in einer Menge von 2 bis 8 Gewichtsteilen, bezogen auf 100 Gewichtsteile des halogenhaltigen Polymeren, eingesetzt.

Die Menge der Komponente (b) beträgt vorzugsweise 0,5 bis 10 Gewichtsteile, insbesondere 1 bis 3 Gewichtsteile, bezogen auf 100 Gewichtsteile des halogenhaltigen Polymeren.

Bei den im Stand der Technik verwendeten Calcium-Zink-Stabilisatoren wird eine große Menge Zinkkomponente benötigt, um die gewünschten Eigenschaften zu gewährleisten. Wie in den nachfolgenden Beispielen dokumentiert, werden beispielsweise in Rezeptur V2 gemäß dem Stand der Technik 0,8 Gewichtsteile Zinklaurat eingesetzt, während in den erfindungsgemäßen Kombinationen B1 und B2 nur 0,45 bzw.0,3 Gewichtsteile Zinklaurat benötigt werden. Rezepturen V4 und V5 gemäß dem Stand der Technik enthalten 1,05 bzw. 1,6 Gewichtsteile Zinkstearat, wogegen die erfindungsgemäßen Kombinationen B3 und B4 nur 0,35 bzw. 0,40 Gewichtsteile Zinkstearat benötigen. Aus den hier aufgeführten Beispielen wird ersichtlich, daß die Zinkmenge, hier in Form von Zinklaurat bzw. Zinkstearat, auf bis zu 25% der bislang nach dem Stand der Technik erforderlichen Menge reduziert werden kann.

Das flüssige oder feste, anorganische oder organische Zinksalz wird erfindungsgemäß in einer zur Erreichung der gewünschten Eigenschaften nötigen Menge eingesetzt. Diese liegt vorzugsweise im Bereich von 0,1 bis 12 Gewichtsteilen, insbesondere im Bereich von 0,5 bis 7 Gewichtsteilen, bezogen auf 100 Gewichtsteile des halogenhaltigen Polymeren. Besonders bevorzugt ist eine Menge von 0,5 bis 2 Gewichtsteilen Zinksalz, bezogen auf 100 Gewichtsteile des halogenhaltigen Polymeren.

Das erfindungsgemäß verwendete Zinksalz wird beispielsweise gewählt aus Zinkoxid, Zinksulfid, Zinkcaprylat, Zinklaurat, Zinkstearat, Zinkbehenat, Zinkacetylacetonat, Zinkarachinat, Zinkboraten, Zinkstannaten und Zinkhydroxistannaten. Bevorzugt werden Zinkcaprylat, Zinklaurat, Zinkstearat, Zinkarachinat und Zinkbehenat, insbesondere bevorzugt Zinklaurat und Zinkstearat, eingesetzt.

Erfindungsgemäß wird als halogenhaltiges Polymer bevorzugt Polyvinylchlorid verwendet.

Der in der vorliegenden Erfindung verwendete Begriff Polyvinylchlorid umfaßt gebräuchliche Homopolymerisate oder Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-wert kann beispielsweise zwischen 50 und 100 liegen.

Die erfindungsgemäß verwendeten Stabilisatorkombinationen können mit weiteren Wärme-, Licht- und Alterungsschutzmitteln kombiniert werden. Solche Verbindungen, die üblicherweise als Additive für chlorhaltige Polymere verwendet werden, sind beispielsweise Oxide und/oder Hydroxide von Metallen, z.B. Calciumhydroxid oder Zinkoxid; Zeolithe oder zinnhaltige Stabilisatoren. Ferner können organische Stabilisatoren wie 1,3-Diketone bzw. deren Metallsalze, Polyole, Isocyanurate, Dihydropyridine, Epoxide und Phosphite und/oder anorganische Stabilisatoren wie z.B. Granate, modifizierte Hydrotalcite oder sonstige Schichtverbindungen verwendet werden.

Erfindungsgemäß können in den für Kabelummantelungen verwendeten Formmassen üblicherweise eingesetzte Zuschlagstoffe, wie Füllstoffe (z.B. Kreide, Kaolinit), Pigmente (z.B. Tiandioxid), Flammschutzmittel (z.B. Magnesiumhydroxid, Aluminiumhydroxid, Antimontrioxid), Verstärkungsmittel (z.B. Glasfasern, Talkum) und Weichmacher (Phthalat-, Phosphat-, Polymerweichmacher, Chlorparaffine) enthalten sein.

Zur Einstellung der rheologischen Erfordernisse können den halogenhaltigen Polymeren Gleitmittel, wie Paraffinwachse, niedermolekulare Polyolefine, Estergleitmittel aus mono- oder polyvalenten Alkoholen und Mono- oder Dicarbonsäuren oder Amidwachse, zugesetzt werden. Ferner können den chlorhaltigen Polymeren weitere Additive, wie Antioxidantien, UV- und Lichtschutzmittel, wie sterisch gehinderte Amine, optische Aufheller und schwefelhaltige Verbindungen, insbesondere die schwefelhaltigen organischen Verbindungen, die zur Herstellung von zinnhaltigen Stabilisatoren verwendet werden, zugesetzt werden.

Die nachfolgenden Beispiele erläutern die Erfindung. Teile- und Prozentangaben beziehen sich darin, soweit nicht anders angegeben, auf das Gewicht.

Bei den mit "B" bezeichneten Zusammensetzungen handelt es sich um erfindungsgemäß verwendete Stabilisatorkombinationen, während die mit "V" bezeichneten Zusammensetzungen nicht erfindungsgemäß zusammengesetzte Stabilisatorzusammensetzungen sind.

Beispiel 1

Für die Zusammensetzung V1 wurden 100 Teile S-Polyvinylchlorid K-Wert 70, 50 Teile Diisodecylphthalat, 50 Teile gecoatete Kreide, 0,1 Teil Bisphenol A, 0,4 Teile Bleistearat, 3,4 Teile 4-basisches Bleisulfat, 0,3 Teile Calciumstearat und 0,2 Teile Paraffinwachs gemischt. Nach üblichen Aufbereitungsverfahren wurde aus dieser Zusammensetzung V1 ein Kabel mit einem äußeren Durchmesser von 2,92 mm und einem Leiterdurchmesser von 1,3 mm mit einem Einschnecken-Laborextruder extrudiert.

Zur Messung der Langzeitbeständigkeit des elektrischen Widerstands wurde ein 5 m langes Stück davon in einem Wasserbad mit 70°C gelagert. Vor Beginn der Wasserlagerung und nach einem Jahr Wasserlagerung wurde der elektrische Widerstand ermittelt.

Beispiel 2

Für die Zusammensetzung V2 wurden 100 Teile S-Polyvinylchlorid K-Wert 70, 50 Teile Diisodecylphthalat, 50 Teile gecoatete Kreide, 0,1 Teil Bisphenol A, 0,1 Teil Calciumstearat, 2,9 Teile Hydrotalcit (Alkamizer 1, Handelsname), 0,8 Teile Zinklaurat und 0,2 Teile Paraffinwachs gemischt. Die Verarbeitbarkeit der Zusammensetzung V2 entspricht Zusammensetzung V1. Mit Zusammensetzung V2 wurde unter denselben Bedingungen, wie in Beispiel 1 angegeben, ein Kabel extrudiert. Dieses Kabel wurde genau wie das Kabel aus Zusammensetzung V1 in einem 70°C warmen Wasserbad gelagert und der elektrische Widerstand vor Beginn der Wasserlagerung und nach einem Jahr Wasserlagerung gemessen.

Beispiel 3

Die erfindungsgemäße Zusammensetzung B1 wurde aus 100 Teilen S-Polyvinylchlorid K-Wert 70, 50 Teilen Diisodecylphthalat, 50 Teilen gecoateter Kreide, 0,1 Teilen Bisphenol A, 3,0 Teilen Hydrotalcit (Alkamizer 1, Handelsname), 1,0 Teilen basischem Calcium-Aluminium-Hydroxyphosphit, 0,45 Teilen Zinklaurat und 0,2 Teilen Paraffinwachs hergestellt. Auch hier sind die Verarbeitungseigenschaften denen der Zusammensetzung V1 gleich. Erfindungsgemäß wurde aus der Zusammensetzung B1 ebenfalls ein Kabel mit gleichen Dimensionen, wie für V1 beschrieben, extrudiert und anschließend der Wasserlagerung bei 70°C unterworfen. Die Messung des elektrischen Widerstandes erfolgte analog den Beispielen 1 und 2.

## Beispiel 4

Die erfindungsgemäße Zusammensetzung B2 wurde aus 100 Teilen Polyvinylchlorid K-Wert 70, 50 Teilen Diisodecylphthalat, 50 Teilen gecoateter Kreide, 0,1 Teilen Bisphenol A, 2,0 Teilen Hydrotalcit (Alkamizer 1, Handelsname), 2,0 Teilen basischem Calcium-Aluminium-hydroxyfumarat, 0,3 Teilen Zinklaurat und 0,2 Teile Paraffinwachs hergestellt. Die Extrusion des Kabels und die Wasserlagerung und Messung des elektrischen Widerstandes wurden unter gleichen Bedingungen, wie in den Beispielen 1 bis 3 beschrieben, durchgeführt.

In Tabelle 1 sind die Ergebnisse der Messung des elektrischen Widerstandes zu Beginn und nach einem Jahr Wasserlagerung bei 70°C zusammengefaßt.

Tabelle 1

| Beispiel | K-Wert [MΩkm] bei 70°C [1] | |
|---|---|---|
| | frisch extrudiert | nach 1 Jahr Wasserlagerung bei 70°C |
| 1 | 3,102 | 2,803 |
| 2 | 2,984 | 0,540 |
| 3 | 3,187 | 3,019 |
| 4 | 3,177 | 3,124 |

[1] Die elektrische Widerstandskonstante K [MΩkm] wird wie folgt berechnet:

$$K = \frac{l \cdot R}{1000 \log_{10} \cdot (D/d)}$$

wobei

D = Durchmesser [mm] des Kabels

d = Durchmesser [mm] des Leiters

1 = Länge [m] des Kabels

R = Widerstand [MΩ] des Kabels

bedeuten.

Ein Vergleich der Zusammensetzung V1 und V2 zeigt, daß Zusammensetzung V2, die den Calcium-Zink-Stabilisator enthält, im Langzeitverhalten bei Einwirkung von Feuchtigkeit gegenüber Zusammensetzung V1 mit Bleistabilisator einen deutlich schlechteren elektrischen Widerstand nach der einjährigen Wasserlagerung bei 70°C besitzt. Die aus den erfindungsgemäßen Zusammensetzungen B1 und B2 hergestellten Kabel hingegen zeigen bei der Messung des elektrischen Widerstandes nach einem Jahr Lagerung in 70°C warmem Wasser einen Wert, der sogar noch etwas über dem der Zusammensetzung V1 mit Bleistabilisator liegt. Diese Mischungen können demzufolge besonders vorteilhaft dort eingesetzt werden, wo ein hoher elektrischer Widerstandswert auch noch nach langer Zeit gefordert ist, insbesondere auch bei Einfluß von Feuchtigkeit.

## Beispiel 5

Aus der Zusammensetzung V3 bestehend aus 100 Teilen Polyvinylchlorid (K-Wert 70), 45 Teilen TOTM (Trioctyltrimellitat), 20 Teilen calciniertem Kaolin, 6 Teilen zweibasischem Bleiphthalat, 0,5 Teilen Calciumstearat, 0,3 Teilen Bisphenol A und 3 Teilen Antimontrioxid, wurde, wie in Beispiel 1 beschrieben, ein Kabel extrudiert und ein 5 m langes Stück davon einer Wasserlagerung bei 70°C unterzogen. Die Messung des elektrischen Widerstandes erfolgte zu Beginn und nach 1 Jahr Wasserlagerung bei 70°C.

Beispiel 6

Zusammensetzung V4 wurde, wie in Beispiel 5 hergestellt, nur daß statt 6 Teilen Bleiphthalat und 0,5 Teilen Calciumstearat 4 Teile Hydrotalcit (Alkamizer 1, Handelsname), 1,05 Teile Zinkstearat und 0,9 Teile Calciumstearat eingesetzt wurden. Aus dieser Mischung wurde für die anschließende Wasserlagerung bei 70°C ebenfalls, wie in Beispiel 1 beschrieben, ein Kabel extrudiert. Die Messung des elektrischen Widerstandes erfolgte zu Beginn und nach 1 Jahr Wasserlagerung bei 70°C.

Beispiel 7

Für die Zusammensetzung V5 wurden die folgenden Komponenten verwendet: 100 Teile Polyvinylchlorid, 45 Teile TOTM, 20 Teile calciniertes Kaolin, 3 Teile Antimontrioxid, 1 Teil Hydrotalcit (Alkamizer 1, Handelsname), 0,6 Teile Bisphenol A, 1,6 Teile Zinkstearat, 1,61 Teile Dipentaerythritol und 0,8 Teile Calciumlaurat. Aus dieser Mischung wurde für die anschließende Wasserlagerung bei 70°C ebenfalls, wie in Beispiel 1 beschrieben, ein Kabel extrudiert. Die Messung des elektrischen Widerstandes erfolgte zu Beginn und nach 1 Jahr Wasserlagerung bei 70°C.

**Beispiel 8**

Die erfindungsgemäße Zusammensetzung B3 setzte sich folgendermaßen zusammen: 100 Teile Polyvinylchlorid, 45 Teile TOTM, 20 Teile calciniertes Kaolin, 0,3 Teile Bisphenol A, 3,I Teile Hydrotalcit (Alkamizer 1, Handelsname), 1,2 Teile Calcium-Aluminium-Hydroxyphosphit, 0,35 Teile Zinkstearat und 3 Teile Antimontrioxid. Aus dieser Mischung wurde für die anschließende Wasserlagerung bei 70°C ebenfalls, wie in Beispiel 1 beschrieben, ein Kabel extrudiert. Die Messung des elektrischen Widerstandes erfolgte zu Beginn und nach 1 Jahr Wasserlagerung bei 70°C.

Beispiel 9

Die erfindungsgemäße Zusammensetzung B4 enthielt neben 100 Teilen Polyvinylchlorid, 45 Teilen TOTM, 20 Teilen calciniertem Clay und 3 Teilen Antimontrioxid 0,3 Teile Bisphenol A, 3,3 Teile Hydrotalcit (Alkamizer 1, Handelsname), 0,8 Teile Calcium-Aluminium-Hydroxyfumarat und 0,4 Teile Zinkstearat. Aus dieser Mischung wurde für die anschließende Wasserlagerung bei 70°C ebenfalls, wie in Beispiel 1 beschrieben, ein Kabel extrudiert. Die Messung des elektrischen Widerstandes erfolgte zu Beginn und nach 1 Jahr Wasserlagerung bei 70°C.

Die elektrischen Widerstandswerte der aus den Zusammensetzungen V3, V4, V5, B3 und B4 extrudierten Kabel wurden nach einjähriger Wasserlagerung bei 70°C bestimmt. Die Ergebnisse des elektrischen Widerstandes vor der Lagerung und nach einjähriger Wasserlagerung sind in Tabelle 2 zusammengefaßt.

Tabelle 2

| Beispiel | K-Wert [MΩkm] bei 70°C | |
|---|---|---|
| | frisch extrudiert | nach 1 Jahr Wasserlagerung bei 70°C |
| 5 | 5,438 | 5,342 |
| 6 | 5,254 | 0,784 |
| 7 | 5,371 | 0,367 |
| 8 | 5,211 | 5,195 |
| 9 | 5,562 | 5,422 |

Alle Beispiele ergeben hinsichtlich der stabilisierenden Eigenschaften vergleichbare Werte und wären allein unter diesem Gesichtspunkt auch einsetzbar. Erst die Messung des elektrischen Widerstandes nach längerer Wasserlagerung bei 70°C offenbart, daß neben den bekannten und derzeit weitverbreiteten Bleistabilisatoren auf Basis Bleiphthalat nur mit den erfindungsgemäß verwendeten Stabilisatorkombinationen dauerhaft ein ausreichend hoher elektrischer Widerstand erreicht wird. Bisher übliche Calcium-Zink-Stabilisatoren ergeben in der ersten Phase nach der Herstellung einen den Bleistabilisatoren vergleichbaren elektrischen Widerstand, dieser geht jedoch bei Feuchtigkeitseinwirkung im Laufe der Zeit drastisch zurück.

**Patentansprüche**

**1.**    Verwendung einer Formmasse, enthaltend mindestens ein halogenhaltiges Polymer und eine Stabilisatorkombination, umfassend

(a) mindestens einen natürlichen oder synthetischen Hydrotalcit, der gegebenenfalls oberflächenmodifiziert ist, und

(b) mindestens eine basische Calcium-Aluminium-Hydroxyverbindung, gewählt aus

(b1) basischen Calcium-Aluminium-Hydroxyphosphiten der allgemeinen Formel (I)

$$Ca_xAl_2(OH)_{2(x+3-y)}(HPO_3)_y^{2-} \cdot mH_2O \qquad\qquad (I)$$

worin

$$2 \leq x < 12,$$

$$\frac{2x+5}{2} > y > 0$$

und

$$0 \leq m \leq 12$$

bedeutet,
ausgenommen y=1, wenn $2 \leq x \leq 8$ ist;
und/oder
(b2) basischen Calcium-Aluminium-Hydroxy-Carboxylaten der allgemeinen Formel (II)

$$Ca_xAl_2(OH)_{[(2x+6)-y]}A_{y/n}^{n-} \cdot mH_2O \qquad\qquad (II)$$

worin

$$2 \leq x \leq 12,$$

$$\frac{2x+5}{2} > y > 0,$$

$$0 \leq m \leq 12,$$

$$1 \leq n \leq 8$$

und

$A^{n-}$ ein aliphatisches gesättigtes, ungesättigtes, geradkettiges oder verzweigtes ein- oder mehrfunktionelles Carbonsäureanion mit 1 bis 22 Kohlenstoffatomen oder ein aromatisches oder heteroaromatisches ein- oder mehrfunktionelles Carbonsäureanion mit 6 bis 20 Kohlenstoffatomen oder Kombinationen hiervon, bedeutet ausgenommen y=1, wenn $2 \leq x \leq 8$ ist,
für Kabelummantelungen.

2. Verwendung nach Anspruch 1, **dadurch gekennzeichnet,** daß die Stabilisatorkombination außerdem mindestens ein flüssiges oder festes, organisches oder anorganisches Zinksalz enthält.

3. Verwendung nach Anspruch 1 oder 2, **dadurch gekennzeichnet,** daß die Komponente (a) in einer Menge von 1 bis 12 Gewichtsteilen und die Komponenten (b1) und/oder (b2) zusammen in einer Menge von 0,5 bis 10 Gewichtsteilen, bezogen auf 100 Gewichtsteile halogenhaltiges Polymer, in der Formmasse enthalten sind.

4. Verwendung nach Anspruch 3, **dadurch gekennzeichnet,** daß die Komponente (a) in einer Menge von 2 bis 8 Gewichtsteilen und die Komponenten (b1) und/oder (b2) zusammen in einer Menge von 1 bis 3 Gewichtsteilen, bezogen auf 100 Gewichtsteile halogenhaltiges Polymer, in der Formmasse enthalten sind.

5. Verwendung nach einem der Ansprüche 1 bis 4, **dadurch gekennzeichnet,** daß das halogenhaltige Polymer Polyvinylchlorid ist.

**Claims**

1. Use of a molding composition containing at least one halogen-containing polymer and a stabilizer composition, comprising

(a) at least one natural or synthetic hydrotalcite which is optionally surface-modified, and
(b) at least one basic calcium-aluminum-hydroxy compound selected from

(b1) basic calcium-aluminum-hydroxy-phosphites represented by the general formula (I)

$$Ca_xAl_2(OH)_{2(x+3-y)}(HPO_3)y^{2-}\cdot mH_2O \qquad (I)$$

wherein

$$2 \leq x \leq 12$$

$$\frac{2x+5}{2} > y > 0$$

$$0 \leq m \leq 12,$$

except for y=1 when $2 \leq x \leq 8$;
and/or
(b2) basic calcium-aluminum-hydroxy-carboxylates represented by the general formula (II)

$$Ca_xAl_2(OH)_{[(2x+6)-y]}A_{y/n}^{n-}\cdot mH_2O \qquad (II)$$

wherein

$$2 \leq x \leq 12,$$

$$\frac{2x+5}{2} > y > 0$$

$$0 \leq m \leq 12,$$

$$1 \leq n \leq 8,$$

and

$A^{n-}$ represents an aliphatic saturated, unsaturated, straight-chain or branched mono- or polyfunctional carboxylic acid anion having 1 to 22 carbon atoms or an aromatic or heteroaromatic mono- or polyfunctional carboxylic acid anion having 6 to 20 carbon atoms, or combinations thereof,
except for y=1, when $2 \leq x \leq 8$
for cable sheathings.

2. Use according to claim 1, **characterized in** that said stabilizer composition further contains at least one liquid or solid, organic or inorganic zinc salt.

3. Use according to claim 1 or 2, **characterized in** that said component (a) is contained in said molding composition in an amount of from 1 to 12 parts by weight and component (b1) and/or (b2) is/are jointly contained in said molding composition in an amount of from 0.5 to 10 parts by weight, based on 100 parts by weight of halogen-containing polymer.

4. Use according to claim 3, characterized in that component (a) is contained in said molding composition in an amount of from 2 to 8 parts by weight and component (b1) and/or (b1) is/are jointly contained in said molding composition in an amount of from 1 to 3 parts by weight, based on 100 parts by weight of halogen-containing polymer.

5. Use according to any one of claims 1 to 4, characterized in that said halogen-containing polymer is polyvinyl chloride.


**Revendications**

1. Utilisation pour des gaines de câbles d'une masse pouvant être mise en forme, contenant au moins un polymère halogéné et une combinaison de stabilisants, englobant

   (a) au moins une hydrotalcite naturelle ou synthétique, qui est le cas échéant modifiée en surface, et
   (b) au moins un composé hydroxy basique de calcium-aluminium choisi parmi

   (b1) les hydroxyphosphites basiques de calcium-aluminium de la formule générale (I)

$$Ca_xAl_2(OH)_{2(x+3-y)}(HPO_3)_y^{2-} \cdot mH_2O \qquad (I)$$

   dans laquelle signifie

$$2 \leq x \leq 12,$$

$$\frac{2x+5}{2} > y > 0,$$

   et
   $0 \leq m \leq 12,$
   excepté y = 1, si $2 \leq x \leq 8$ ;
   et/ou
   (b2) des hydroxy-carboxylates basiques de calcium-aluminium de la formule générale (II)

$$Ca_xAl_2(OH)_{[(2x+6)-y]}A_{y/n}^{n-} \cdot mH_2O \qquad \text{'II)}$$

   dans laquelle

$$2 \leq x \leq 12$$

$$\frac{2x+5}{2} > y > 0,$$

$$0 \leq m \leq 12,$$

$$1 \leq n \leq 8, \text{ et}$$

$A^{n-}$ signifie un anion d'acide carboxylique aliphatique saturé, insaturé, à chaîne linéaire ou ramifiée, monofonctionnel ou multifonctionnel avec 1 à 22 atomes de carbone, ou un anion d'acide carboxylique aromatique ou hétéroaromatique, monofonctionnel ou multifonctionnel avec 6 à 20 atomes de carbone, ou des combinaisons de
ceux-ci,
excepté y = 1, si $2 \leq x \leq 8$.

2. Utilisation selon la revendication 1, caractérisée en ce que la combinaison de stabilisants contient en outre au moins un sel de zinc liquide ou solide, organique ou inorganique.

3. Utilisation selon la revendication 1 ou 2, caractérisée en ce que, dans la masse pouvant être mise en forme, le composant (a) est contenu en une quantité de 1 à 12 parties en poids, et les composants (b1) et/ou (b2) sont contenus ensemble en une quantité de 0,5 à 10 parties en poids, rapportées à 100 parties en poids du polymère halogéné.

4. Utilisation selon la revendication 3, caractérisée en ce que, dans la masse pouvant être mise en forme, le composant (a) est contenu en une quantité de 2 à 8 parties en poids, et les composants (b1) et/ou (b2) sont contenus ensemble en une quantité de 1 à 3 parties en poids, rapportées à 100 parties en poids du polymère halogéné.

5. Utilisation selon l'une quelconque des revendications 1 à 4, caractérisée en ce que le polymère halogéné est du poly(chlorure de vinyle).